# EUROPEAN PATENT SPECIFICATION

(11) **EP 2 735 501 B1**
(45) Date of publication and mention of the grant of the patent: **27.06.2018**
(21) Application number: 13194566.9
(22) Date of filing: 27.11.2013
(51) Int. Cl.: B62M 6/55, B62M 11/14

(54) **Centrally-positioned power output mechanism of power-assisted bicycle**
Zentral positionierter Leistungsausgangsmechanismus für ein leistungsunterstütztes Fahrrad
Mécanisme de sortie de puissance positionnée au centre de bicyclette à assistance motorisée

(30) Priority: 27.11.2012 TW 101222985
(43) Date of publication of application: 28.05.2014
(73) Proprietor: J.D Components Co., Ltd., Shou Shui Hsiang, Chang Hua Hsien (TW)
(72) Inventor: Pai, Min-Lang, Chang Hua Hsien (TW)
(74) Representative: Becker Kurig Straus

(56) References cited:
- EP-A1- 2 298 636
- CN-A- 102 514 679
- DE-A1-102010 051 727
- JP-A- H09 169 290
- JP-A- H10 305 794
- US-A1- 2002 014 366

## Description

### BACKGROUND OF THE INVENTION

### 1. Technical Field

The present invention relates to power-assisted bicycles, and more particularly, to a centrally-positioned power output mechanism of a power-assisted bicycle.

### 2. Description of Related Art

A conventional power-assisted bicycle is driven jointly by a treading force exerted by a bicyclist and an auxiliary driving force generated from a power output mechanism (such as a centrally-positioned motor), such that the conventional power-assisted bicycle does not overburden the bicyclist physically but serves as a means of recreation and fitness training.

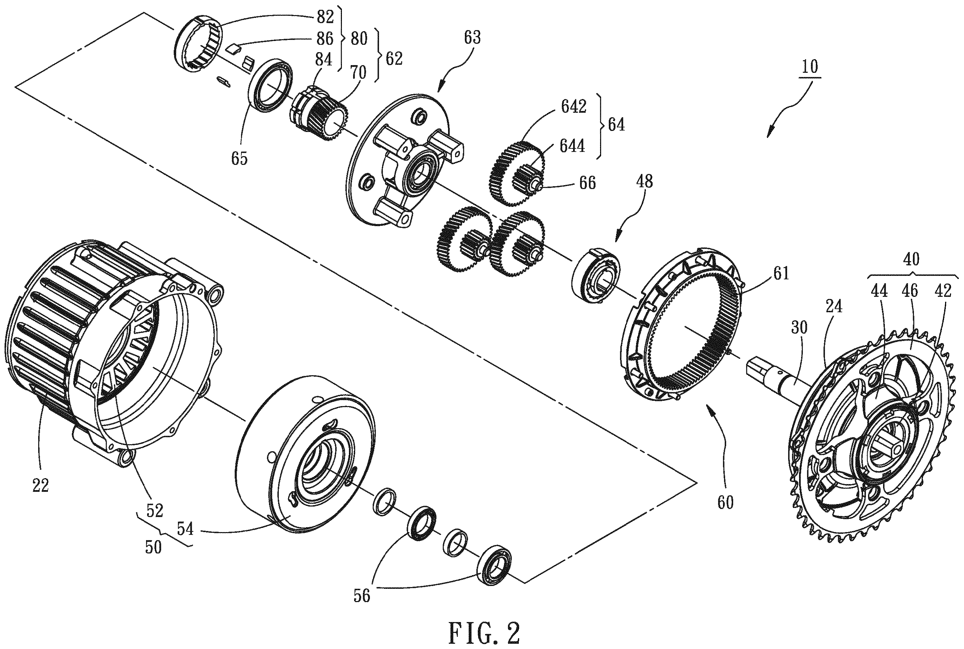

Parts and components of a typical centrally-positioned motor are so numerous that, during its operation, the centrally-positioned motor is likely to produce noise and manifest vibration caused by errors arising from the previous processing of the parts and components of the centrally-positioned motor. To solve the aforesaid problem, Japan Patent No. 3974386 discloses Deceleration Gear Mechanism of Electrically-driven Device which comprises a plurality of helical gears (shown in FIG. 2) disposed between a motor driving force output shaft (shown in FIG. 2) and a crankshaft (shown in FIG. 2) and adapted to eliminate processing errors; however, the aforesaid components are arranged and aligned in different axial directions, thereby occupying much space and increasing the delivery cost. Accordingly, there is still room for improvement of the prior art. The closest prior art document CN102514679 discloses a centrally-positioned power output mechanism for a power-assisted bicycle in accordance with the preamble of claim 1.

### BRIEF SUMMARY OF THE INVENTION

It is an objective of the present invention to provide a centrally-positioned power output mechanism of a power-assisted bicycle with a view to enhancing compactness and eliminating noise and vibration generated during operation of the power-assisted bicycle and caused by errors arising from the previous processing of parts and components of a conventional centrally-positioned motor.

In order to achieve the above and other objectives, the present invention provides a centrally-positioned power output mechanism which comprises a housing, a crankshaft, a large sprocket, a ring gear, a motor, and a transmission unit. The crankshaft is rotatably inserted through the housing. The large sprocket is connected to an end of the crankshaft, such that the large sprocket is driven by the crankshaft to rotate. The large sprocket has a transmission bushing extending into the housing. The ring gear is fixed to the housing and disposed therein. The motor is disposed inside the housing and sleeved onto the crankshaft to provide an auxiliary driving force. The motor has a rotor rotatable relative to the crankshaft. The transmission unit is disposed inside the housing and has a sun gear, a planetary carrier, and at least two planetary gears. The sun gear is sleeved onto the crankshaft and has a helical gear and a ratchet. The ratchet is fixed to the rotor of the motor and coaxially connected to the helical gear. The planetary carrier is rotatably sleeved onto the crankshaft and connected to the transmission bushing of the large sprocket, such that the planetary carrier synchronously drives the large sprocket. The planetary gears are disposed at the planetary carrier and each has a helical tooth portion and a planetary tooth portion. The helical tooth portion is engaged with the helical gear of the sun gear. The planetary tooth portion is coaxially connected to a lateral side of the helical tooth portion and engaged with the ring gear. Hence, when driven by the sun gear, each of the planetary gears revolves along the circumference of the ring gear and drive the planetary carrier to rotate.

Accordingly, the centrally-positioned power output mechanism of the present invention is characterized in that the ratchet and the helical gear are integrated to form the sun gear for functioning as the primary power transmission component to thereby enhance compactness, eliminate processing errors, and effectively reduce noise and vibration during operation.

### BRIEF DESCRIPTION OF THE SEVERAL VIEWS OF THE DRAWINGS

Structural features and advantages of the present invention are hereunder illustrated with a preferred embodiment in conjunction with the accompanying drawings, in which:
FIG. 1 is a perspective view of a preferred embodiment of the present invention;
FIG. 2 is an exploded view of the preferred embodiment of the present invention;
FIG. 3 is a longitudinal cross-sectional view of the preferred embodiment of the present invention;
FIG. 4 is a transverse cross-sectional view of the preferred embodiment of the present invention, showing the relationship between a rotor of a motor and a ratchet;
FIG. 5 is another transverse cross-sectional view of the preferred embodiment of the present invention, showing an idle planetary carrier; and
FIG. 6 is similar to FIG. 5 but shows the planetary carrier rotating.

### DETAILED DESCRIPTION OF THE INVENTION

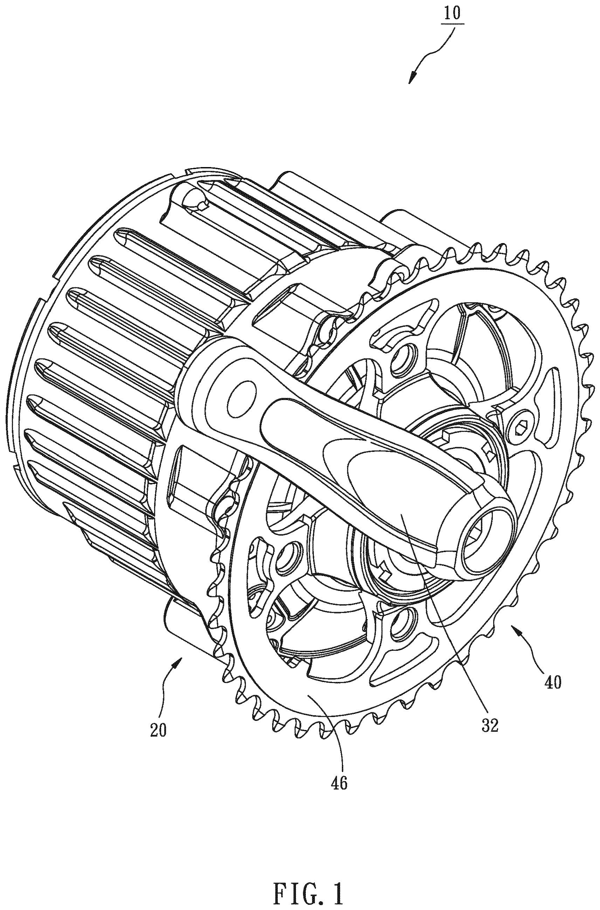

Referring to FIGs. 1, 2, in a preferred embodiment of the present invention, a centrally-positioned power output mechanism 10 is for use with a power-assisted bicycle and comprises a housing 20, a crankshaft 30, a large sprocket 40, a motor 50, and a transmission unit 60.

The housing 20 has a casing 22 and an end cover 24 fixed to one end of the casing 22.

The crankshaft 30 is inserted through the housing 20. The two ends of the crankshaft 30 protrude out of the housing 20 and both are connected with a crank 32 respectively.

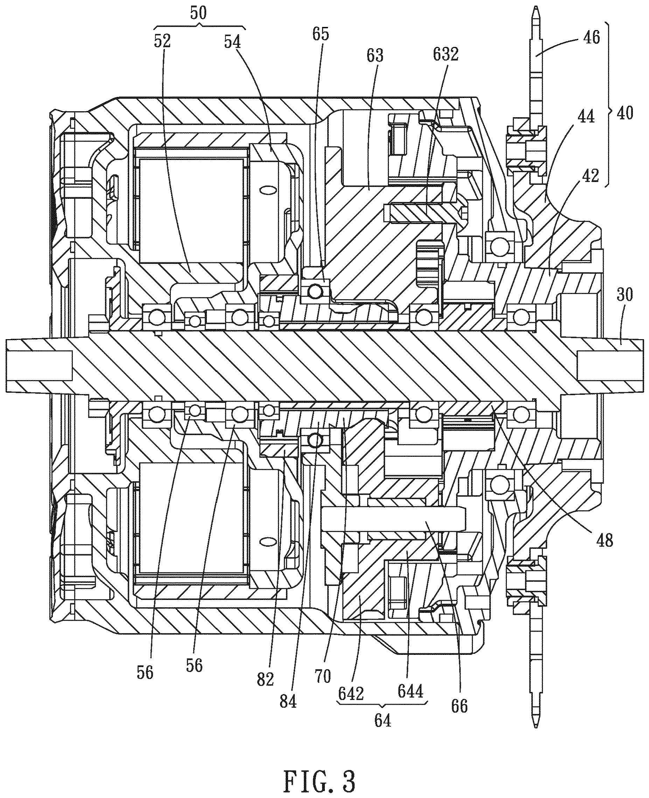

Referring to FIG. 2 and FIG. 3, the large sprocket 40 has a transmission bushing 42, a sprocket holder 44 fixed to the transmission bushing 42, and a sprocket body 46 fixed to the sprocket holder 44. One end of the transmission bushing 42 extends into the housing 20 and is connected to the crankshaft 30 by means of a ratchet 48, such that the large sprocket 40 is driven by the crankshaft 30 to undergo unidirectional rotation.

The motor 50 is disposed inside the housing 20 and has a stator 52 and a rotor 54. The rotor 54 is sleeved onto the crankshaft 30, and two ball bearings 56 are disposed between the rotor 54 and the crankshaft 30, thereby facilitating engagement and positioning of the rotor 54 and the crankshaft 30. When supplied with electric current, the stator 52 drives the rotor 54 to rotate relative to the stator 52 and the crankshaft 30.

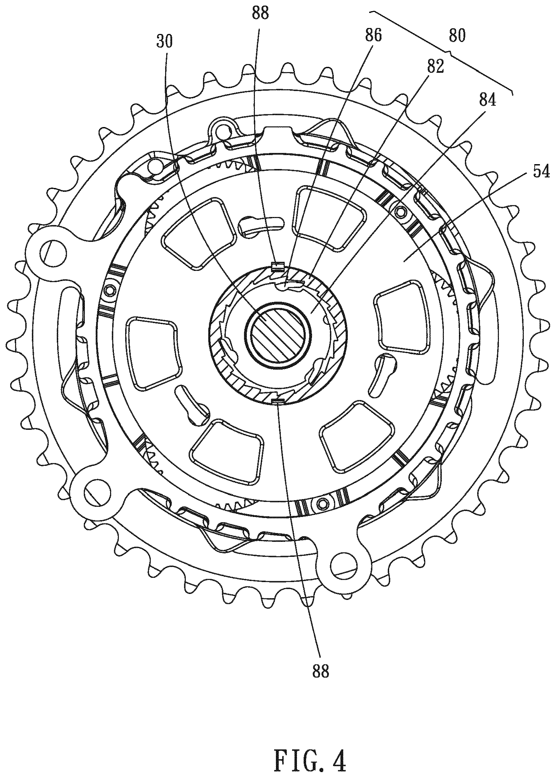

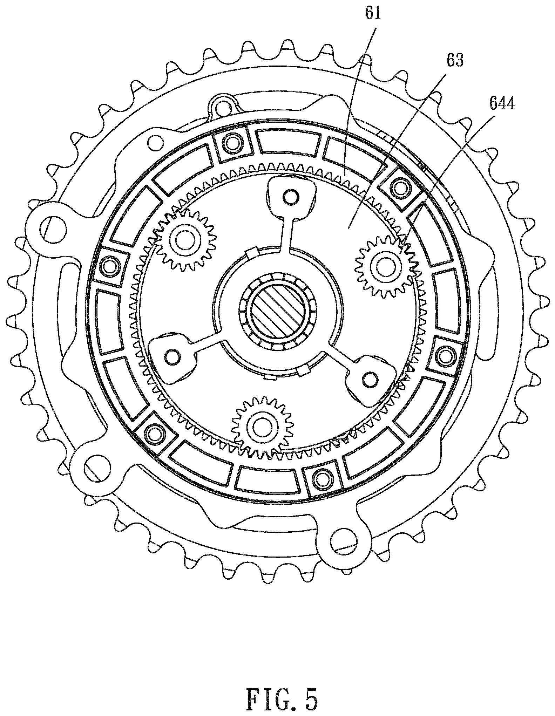

Referring to FIG. 2 through FIG. 4, the transmission unit 60 has a ring gear 61, a sun gear 62, a planetary carrier 63, and three planetary gears 64. The outer circumferential surface of the ring gear 61 is fixed to the inner wall surface of the casing 22 of the housing 20. The sun gear 62 is coaxially sleeved onto the crankshaft 30 and has a helical gear 70 and a ratchet 80. The ratchet 80 has an external ratchet body 82, an internal ratchet body 84, and three ratchet teeth 86. The external ratchet body 82 and the rotor 54 of the motor 50 are coupled together by two opposing coupling keys 88 (or at least a coupling key 88 can do the same function) The internal ratchet body 84 is integrally coaxially connected to one end of the helical gear 70. The ratchet teeth 86 are disposed between the external ratchet body 82 and the internal ratchet body 84. The planetary carrier 63 is rotatably sleeved onto the crankshaft 30 and connected to the transmission bushing 42 of the large sprocket 40 by means of a plurality of bolts 632, such that the planetary carrier 63 synchronously drives the rotation of the large sprocket 40 by means of the transmission bushing 42. A ball bearing 65 is disposed between the planetary carrier 63 and the internal ratchet body 84 to facilitate the engagement and positioning of the planetary carrier 63 and the internal ratchet 84.Each of the planetary gears 64, the planetary carrier 63, and the transmission bushing 42 of the large sprocket 40 are connected by a planetary gear shaft 66.Each of the planetary gears 64 has a helical tooth portion 642 and a planetary tooth portion 644. The helical tooth portion 642 is engaged with the helical gear 70 of the sun gear 62. The planetary tooth portion 644 is coaxially connected to a lateral side of the helical tooth portion 642 and is engaged with the ring gear 61, as shown in FIG. 5.

The structure of the centrally-positioned power output mechanism 10 of the present invention is described above. The operation, assembly process, and features of the centrally-positioned power output mechanism 10 of the present invention is described below.

As soon as a bicyclist starts cycling, the crankshaft 30 gets driven by two cranks 32 and starts to rotate. During the rotation process of the crankshaft 30, the ratchet 48 drives the transmission bushing 42 of the large sprocket 40 to undergo unidirectional rotation and thereby drives the large sprocket 40 to effectuate power output.

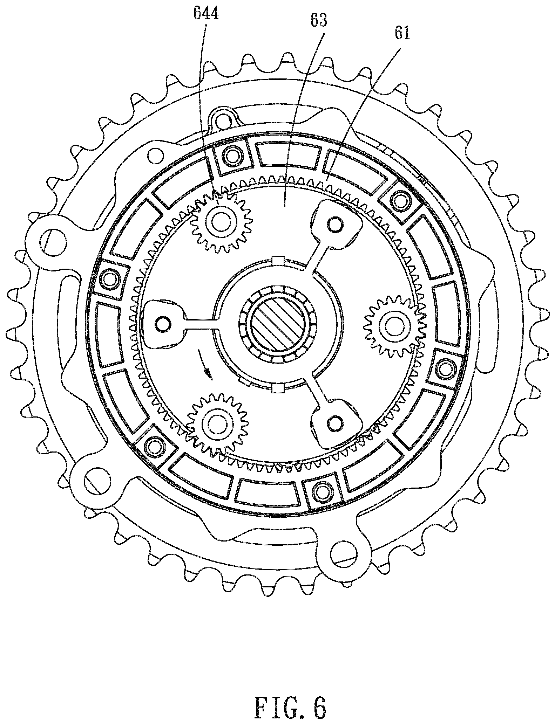

To generate an auxiliary driving force, electric power is supplied to the stator 52 of the motor 50 to drive the rotor 54 to rotate. During the rotation process of the rotor 54, the external ratchet body 82 of the ratchet 80 of the sun gear 62 is driven to rotate first. The external ratchet body 82 drives the internal ratchet body 84 to rotate by means of the ratchet teeth 86. Then, the internal ratchet body 84 drives the helical gear 70 to rotate, such that the sun gear 62 is driven by the rotor 54 of the motor 50 to rotate. The rotation of the sun gear 62 drives the planetary gears 64 to rotate, as the helical gear 70 is engaged with the helical tooth portions 642 of the planetary gears 64; meanwhile, with the ring gear 61 being stationary, each of the planetary gears 64 revolves along the circumference of the ring gear 61 and drive the planetary carrier 63 to rotate, as shown in FIG. 5 and FIG. 6. Hence, the planetary carrier 63 drives the transmission bushing 42 of the large sprocket 40 to rotate and thereby drives the large sprocket 40 to effectuate generation of the auxiliary driving force.

In conclusion, the centrally-positioned power output mechanism 10 of the present invention is characterized in that: the sun gear 62 enables the ratchet 80 and the helical gear 70 to be coupled together by coaxial connection and thus not only surpasses its conventional counterparts in compactness but also keeps the respective features of the ratchet 80 and the helical gear 70, such as smooth operation, low noise, high output torque, and elimination of gaps, to thereby effectively solve the problems of the operational noise and vibration caused by a processing error. Furthermore, the centrally-positioned power output mechanism 10 of the present invention is characterized by the ball bearing 65 disposed between the sun gear 62 and the planetary carrier 63 to facilitate engagement therebetween and thus enhance durability and stability of the structure in its entirety.

Constituent elements of the present invention are disclosed above by a preferred embodiment. However, persons skilled in the art should understand that the preferred embodiment is illustrative of the present invention only, but should not be interpreted as restrictive of the scope of the present invention.

## Claims

1. A centrally-positioned power output mechanism (10) for a power-assisted bicycle, comprising:
a housing (20);
a crankshaft (30) rotatably inserted through the housing (20);
a large sprocket (40) connected to an end of the crankshaft (30) and having a transmission bushing (42) extending into the housing (20);
a motor (50) disposed inside the housing (20), sleeved onto the crankshaft (30), and having a rotor (52) rotatable relative to the crankshaft (30); and
a transmission unit (60) having a ring gear (61);
wherein the transmission unit (60) further has a sun gear (62), a planetary carrier (63), and at least two planetary gears (64), the sun gear (62) being coaxially sleeved onto the crankshaft (30) and the centrally-positioned power output mechanism is **characterized in that** the ring gear (61) is fixed to the housing (20) and disposed therein, and having a helical gear (70) and a ratchet (80), the ratchet (80) being fixed to the rotor (54) of the motor (50) and coaxially connected to the helical gear (70), the planetary carrier (63) being rotatably sleeved onto the crankshaft (30) and connected to the transmission bushing (42) of the large sprocket (40), the planetary gears (64) each being rotatably disposed at the planetary carrier (63) and having a helical tooth portion (642) and a planetary tooth portion (644), the helical tooth portion (642) being engaged with the helical gear (70) of the sun gear (62), and the planetary tooth portion (644) being coaxially connected to a lateral side of the helical tooth portion (642) and being engaged with the ring gear.

2. The centrally-positioned power output mechanism (10) of claim 1, wherein the ratchet (80) of the sun gear (62) has an external ratchet body (82), an internal ratchet body (84), and a plurality of ratchet teeth (86), the external ratchet body (82) is fixed to the rotor (54) of the motor (50), the internal ratchet body (84) is integrally coaxially connected to the helical gear (70), and each of the ratchet teeth (86) is disposed between the external ratchet body (82) and the internal ratchet body (84).

3. The centrally-positioned power output mechanism (10) of claim 2, wherein the external ratchet body (82) of the ratchet (80) and the rotor (54) of the motor (50) is coupled together by at least a coupling key (88).

4. The centrally-positioned power output mechanism (10) of claim 2 or 3, wherein a ball bearing (65) is disposed between the internal ratchet body (84) of the ratchet (80) and the planetary carrier (63).

5. The centrally-positioned power output mechanism (10) of claim 4, wherein at least a ball bearing is disposed between the crankshaft (30) and the rotor (54) of the motor (50).

6. The centrally-positioned power output mechanism (10) of claim 5, wherein a transmission bushing (42) of the large sprocket (40) is connected to the crankshaft (30) by a ratchet (48).

7. The centrally-positioned power output mechanism (10) of claim 6, wherein the transmission bushing (42) of the large sprocket (40), the planetary carrier (63), and each of the planetary gears (64) are connected by a planetary gear shaft (66).

## Patentansprüche

1. Zentral-positionierter Leistungsausgabe-Mechanismus (10) eines kraftunterstützten Fahrrads, welches umfasst:
ein Gehäuse (20);
eine Kurbelwelle (30), die durch das Gehäuse (20) drehbar inseriert ist;
einen großen Zahnkranz (40), der mit einem Ende der Kurbelwelle (30) verbunden ist und eine Übertragungs-Buchse (42) aufweist, die sich in das Gehäuse (20) erstreckt;
einen Motor (50), der in dem Gehäuse (20) vorgesehen ist, auf die Kurbelwelle (30) aufgezogen ist, und einen Rotor (52) aufweist, der relativ zu der Kurbelwelle (30) drehbar ist; und
eine Übertragungseinheit (60) mit einem Hohlrad (61);
worin die Übertragungseinheit (60) weiter ein zentrales Ritzel (62) aufweist, einen Planetenträger (63), und mindestens zwei Planetenräder (64), worin das zentrale Ritzel (62) koaxial auf die Kurbelwelle (30) aufgezogen ist und ein ein Schraubenrad (70) und eine Sperrklinke (80) aufweist, worin die Sperrklinke (80) an dem Rotor (54) des Motors (50) befestigt und koaxial mit dem Schraubenrad (70) verbunden ist, worin der Planetenträger (63) drehbar auf die Kurbelwelle (30) aufgezogen ist, worin der zentral-positionierte Leistungsabgabe-Mechanismus **dadurch gekennzeichnet ist, dass** das Hohlrad (61) an dem Gehäuse (20) fixiert und darin vorgesehen ist, und mit der Übertragungs-Buchse (42) des großen Zahnkranzes (40) verbunden ist, worin die Planetenräder (64) jeweils drehbar an dem Planetenträger (63) vorgesehen sind und einen helikalen Zahnbereich (642) und einen planetarischen Zahnbereich (644) aufweisen, worin der helikale Zahnbereich (642) mit dem Schraubenrad (70) des zentralen Ritzels (62) im Eingriff steht, und worin der planetarische Zahnbereich (644) koaxial mit einer Seite des helikalen Zahnbereichs (642) verbunden ist und mit dem Hohlrad im Eingriff steht.

2. Zentral positionierter Leistungsausgabe-Mechanismus (10) nach Anspruch 1, worin die Sperrklinke (80) des zentralen Ritzels (62) einen externen Sperrklinken-Körper (82) aufweist, einen internen Sperrklinken-Körper (84), und mehrere Sperrklinken-Zähne (86), worin der externe Sperrklinken-Körper (82) an dem Rotor (54) des Motors (50) befestigt ist, worin der interne Sperrklinken-Körper (84) einstückig koaxial mit dem Schraubenrad (70) verbunden ist, und worin jeder Sperrklinken-Zahn (86) zwischen dem externen Sperrklinken-Körper (82) und dem internen Sperrklinken-Körper (84) vorgesehen ist.

3. Zentral positionierter Leistungsausgabe-Mechanismus (10) nach Anspruch 2, worin der externe Sperrklinken-Körper (82) der Sperrklinke (80) und der Rotor (54) des Motors (50) durch mindestens einen Kupplungsschlüssel (88) zusammen gekoppelt sind.

4. Zentral positionierter Leistungsausgabe-Mechanismus (10) nach Anspruch 2 oder 3, worin ein Kugellager (65) zwischen dem internen Sperrklinken-Körper (84) der Sperrklinke (80) und dem Planetenträger (63) vorgesehen ist.

5. Zentral positionierter Leistungsausgabe-Mechanismus (10) nach Anspruch 4, worin mindestens ein Kugellager zwischen der Kurbelwelle (30) und dem Rotor (54) des Motors (50) vorgesehen ist.

6. Zentral positionierter Leistungsausgabe-Mechanismus (10) nach Anspruch 5, worin eine Übertragungs-Buchse (42) des großen Zahnkranz (40) mit der Kurbelwelle (30) durch eine Sperrkinke (48) verbunden ist.

7. Zentral positionierter Leistungsausgabe-Mechanismus (10) nach Anspruch 6, worin die Übertragungs-Buchse (42) des großen Zahnkranz (40), des Planetenträgers (63), und jeder der Planetenräder (64) durch eine Planetengetriebe-Welle (66) verbunden ist.

## Revendications

1. Mécanisme de sortie de puissance positionné au centre (10) pour une bicyclette à assistance motorisée, comprenant :
un boîtier (20) ;
un arbre de pédalier (30) inséré de manière rotative à travers le boîtier (20) ;
une grande roue dentée (40) reliée à une extrémité de l'arbre de pédalier (30) et ayant une douille de transmission (42) s'étendant dans le boîtier (20) ;
un moteur (50) disposé à l'intérieur du boîtier (20), emmanché sur l'arbre de pédalier (30), et comprenant un rotor (52) pouvant tourner par rapport à l'arbre de pédalier (30) ; et
une unité de transmission (60) comprenant une roue à denture intérieure (61) ;
dans lequel l'unité de transmission (60) comprend en outre une roue solaire (62), un support planétaire (63), et au moins deux pignons satellites (64), la roue solaire (62) étant emmanchée de manière coaxiale sur l'arbre de pédalier (30) et le mécanisme de sortie de puissance positionné au centre est **caractérisé en ce que** la roue à denture intérieure (61) est fixée au boîtier (20) et disposée dans celui-ci, et comprenant un pignon hélicoïdal (70) et un cliquet (80), le cliquet (80) étant fixé au rotor (54) du moteur (50) et relié de manière coaxiale au pignon hélicoïdal (70), le support planétaire (63) étant emmanché de manière rotative sur l'arbre de pédalier (30) et relié à la douille de transmission (42) de la grande roue dentée (40), les pignons satellites (64) étant chacun disposés de manière rotative sur le support planétaire (63) et ayant une partie dentée hélicoïdale (642) et une partie dentée planétaire (644), la partie dentée hélicoïdale (642) étant en prise avec le pignon hélicoïdal (70) de la roue solaire (62), et la partie dentée planétaire (644) étant reliée de manière coaxiale à un côté latéral de la partie dentée hélicoïdale (642) et étant en prise avec la roue à denture intérieure.

2. Mécanisme de sortie de puissance positionné au centre (10) selon la revendication 1, dans lequel le cliquet (80) de la roue solaire (62) comprend un corps de cliquet externe (82), un corps de cliquet interne (84), et une pluralité de dents de cliquet (86), le corps de cliquet externe (82) est fixé au rotor (54) du moteur (50), le corps de cliquet interne (84) est relié de manière coaxiale d'un seul tenant au pignon hélicoïdal (70), et chacune des dents de cliquet (86) est disposée entre le corps de cliquet externe (82) et le corps de cliquet interne (84).

3. Mécanisme de sortie de puissance positionné au centre (10) selon la revendication 2, dans lequel le corps de cliquet externe (82) du cliquet (80) et le rotor (54) du moteur (50) sont couplés ensemble par au moins une clavette de couplage (88).

4. Mécanisme de sortie de puissance positionné au centre (10) selon la revendication 2 ou 3, dans lequel un roulement à billes (65) est disposé entre le corps de cliquet interne (84) du cliquet (80) et le support planétaire (63).

5. Mécanisme de sortie de puissance positionné au centre (10) selon la revendication 4, dans lequel au moins un roulement à billes est disposé entre l'arbre de pédalier (30) et le rotor (54) du moteur (50).

6. Mécanisme de sortie de puissance positionné au centre (10) selon la revendication 5, dans lequel une douille de transmission (42) de la grande roue dentée (40) est reliée à l'arbre de pédalier (30) par l'intermédiaire d'un cliquet (48).

7. Mécanisme de sortie de puissance positionné au centre (10) selon la revendication 6, dans lequel la douille de transmission (42) de la grande roue dentée (40), le support planétaire (63), et chacun des pignons satellites (64) sont reliés par un arbre de pignon satellite (66).
